# EUROPÄISCHE PATENTSCHRIFT

(11) **EP 3 642 098 B1**
(45) Veröffentlichungstag und Bekanntmachung des Hinweises auf die Patenterteilung: **16.11.2022**
(21) Anmeldenummer: 18732349.8
(22) Anmeldetag: 21.06.2018
(51) Int. Cl.: B62D 25/00, B62D 27/02

(54) **VERSTÄRKUNGSELEMENT, SYSTEM EINES VERSTÄRKTEN STRUKTURELEMENTES UND VERFAHREN ZUR VERSTÄRKUNG EINES STRUKTURELEMENTES**
REINFORCING ELEMENT, SYSTEM OF A REINFORCED STRUCTURAL ELEMENT AND METHOD FOR REINFORCING A STRUCTURAL ELEMENT
ÉLÉMENT DE RENFORT, SYSTÈME D'UN ÉLÉMENT STRUCTURAL RENFORCÉ ET PROCÉDÉ DE RENFORCEMENT D'UN ÉLÉMENT STRUCTURAL

(30) Priorität: 22.06.2017 EP 17177306
(43) Veröffentlichungstag der Anmeldung: 29.04.2020
(73) Patentinhaber: Sika Technology AG, 6340 Baar (CH)
(72) Erfinder: MUNZINGER, Noah, 8047 Zürich (CH); SOUVAY, Denis, 67400 Illkirch-Graffenstaden (FR); RHEINEGGER, Urs, 8105 Regensdorf (CH)
(74) Vertreter: Sika Patent Attorneys
(86) Internationale Anmeldenummer: PCT/EP2018/066620
(87) Internationale Veröffentlichungsnummer: WO 2018/234475

(56) Entgegenhaltungen:
- EP-A1- 1 930 231
- EP-A1- 2 159 136
- EP-A1- 2 251 250
- GB-A- 2 375 328

## Beschreibung

Die Erfindung betrifft ein Verstärkungselement, ein System eines verstärkten Strukturelementes sowie ein Verfahren zur Verstärkung eines Strukturelementes. Betroffen sind insbesondere Verstärkungselemente für den Einsatz in Karosserien von Fahrzeugen.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken.

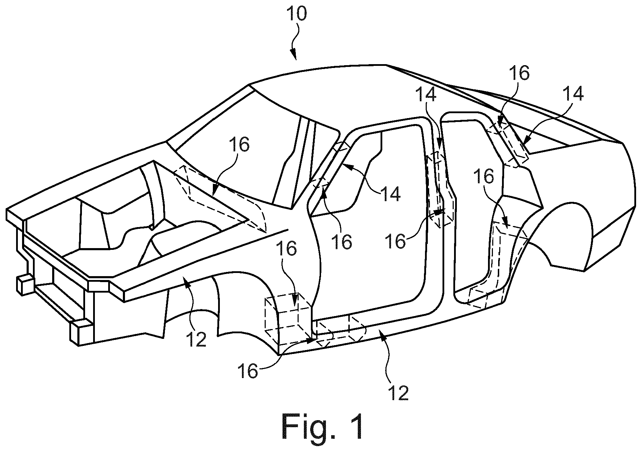

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

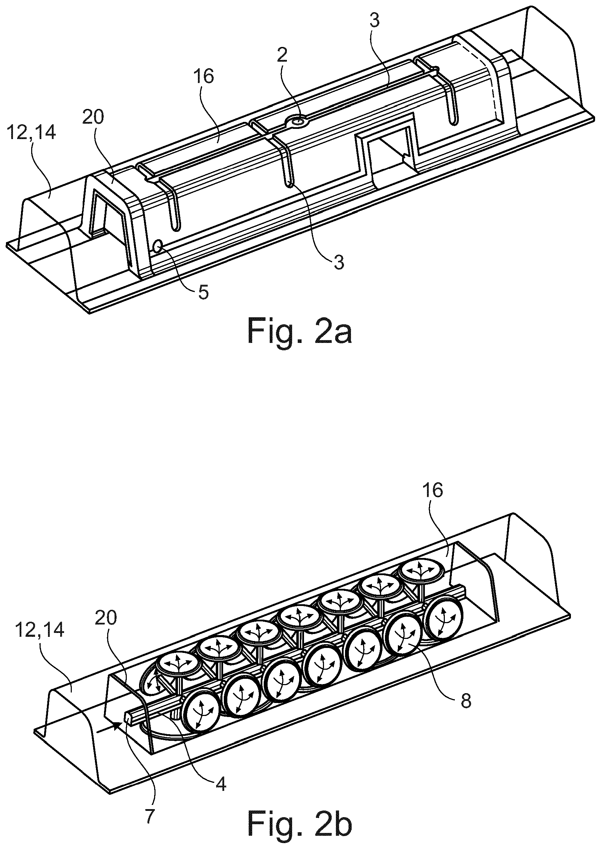

In den Fig. 2a und 2b ist schematisch ein bekanntes System eines verstärkten Strukturelementes dargestellt. Das Strukturelement 12, 14 hat dabei einen Hohlraum, in welchem das Verstärkungselement 16 angeordnet ist. Die Systeme gemäss den Fig. 2a und 2b haben jeweils Anordnungen zur Einbringung eines Klebstoffes 8 zwischen dem Verstärkungselement 16 und dem Strukturelement 12, 14.

In Fig. 2a umfasst dieses System zur Einbringung eines Klebstoffes eine Einfüllöffnung 2, welche als Loch im Strukturelement 12, 14 vorgesehen ist. Des Weiteren umfasst das System zur Verteilung des Klebstoffes Kanäle 3 auf einer Aussenseite des Verstärkungselementes 16. Zudem umfasst das Verstärkungselement 16 Dichtungen 20, welche einen geschlossenen Raum zwischen der Aussenseite des Verstärkungselementes 16 und dem Strukturelement 12, 14 begrenzen. Dieser geschlossene Raum wird nun über die Einfüllöffnung 2 mit Klebstoff aufgefüllt, wobei der Klebstoff mithilfe der Kanäle 3 effizient im Raum verteilt wird. Des Weiteren ist eine Prüföffnung 5 vorgesehen, dank welcher überprüft werden kann, ob der Klebstoff den gesamten Raum ausfüllt.

In Fig. 2b ist ein alternatives bekanntes System zur Befüllung eines Zwischenraumes zwischen Verstärkungselement 16 und Strukturelement 12, 14 mit Klebstoff 8 schematisch dargestellt. Hier wird Klebstoff über eine Einfüllöffnung 7 am Verstärkungselement 16 zugeführt, wobei der Klebstoff 8 dann durch ein System von Leitungen 4 im Verstärkungselement 16 in den Raum zwischen Verstärkungselement 16 und Strukturelement 12, 14 gebracht wird. Auch hier umfasst das Verstärkungselement 16 Dichtungen 20, welche den für den Klebstoff 8 vorgesehenen Raum begrenzen. Ein anhand der Fig. 2a und 2b beschriebenes System ist des Weiteren in der Patentanmeldung WO 2008/077944 A1 offenbart. Ein weiteres ähnliches Verfahren ist von GB 2 375 328 bekannt.

Ein Nachteil solcher bekannter Verstärkungselemente bzw. Systeme zur Verstärkung von Strukturelementen ist es, dass die Verstärkungselemente vergleichsweise aufwendig und präzise hergestellt werden müssen. Dies ist insbesondere deshalb notwendig, weil das Verstärkungselement und das Strukturelement einen zuverlässig geschlossenen Raum zur Einbringung des Klebstoffes definieren müssen. Dies bedingt, dass sowohl das Verstärkungselement als auch das Strukturelement mit geringen Toleranzen gefertigt werden müssen, was kostenintensiver ist. Zudem benötigen solche Systeme eine grössere Menge an Klebstoff als eigentlich für die Verklebung von Verstärkungselement und Strukturelement notwendig wäre, weil ein gesamter Raum zwischen Verstärkungselement bzw. dessen Dichtungen und Strukturelement mit Klebstoff ausgefüllt werden muss.

Der Erfindung liegt daher die Aufgabe zugrunde, ein verbessertes Verstärkungselement bzw. System eines verstärkten Strukturelementes bereitzustellen, welches erlaubt, sowohl das Verstärkungselement als auch das System zur Verstärkung eines Strukturelementes kostengünstiger herstellbar und einfacher handhabbar auszugestalten.

Diese Aufgabe wird zunächst gelöst durch ein Verstärkungselement zur Verstärkung von Strukturelementen, wobei das Verstärkungselement zumindest einen Kanal an einer Aussenseite hat. Dabei bildet die Aussenseite des Verstärkungselementes neben dem Kanal eine Schulter. Weiterhin ist das Verstärkungselement zur Bildung eines offenen Systems bezüglich einer Verklebung des Verstärkungselementes im Strukturelement vorgesehen, wobei in einem Verwendungszustand des Verstärkungselementes im Strukturelement ein Raum zwischen der Schulter des Verstärkungselementes und dem Strukturelement gebildet wird, welcher offen ist gegenüber einem angrenzenden Hohlraum des Strukturelementes.

Die eingangs gestellte Aufgabe wird weiterhin gelöst durch ein System eines verstärkten Strukturelementes, wobei das System umfasst: ein Strukturelement mit einem Hohlraum; ein Verstärkungselement, welches im Hohlraum des Strukturelementes angeordnet ist, und welches zumindest einen Kanal an einer Aussenseite des Verstärkungselementes hat, wobei die Aussenseite des Verstärkungselementes neben dem Kanal eine Schulter bildet; und einen Klebstoff, welcher zumindest teilweise im Kanal und zumindest teilweise auf der Schulter angeordnet ist und das Verstärkungselement mit dem Strukturelement verklebt, wobei ein direkt an die Schulter anschliessender Anschlussbereich der Aussenseite des Verstärkungselementes frei ist von Klebstoff, und wobei ein erster Raum zwischen Schulter und Strukturelement und ein zweiter Raum zwischen Anschlussbereich und Strukturelement gegeneinander offen sind.

Die hier vorgeschlagene Lösung hat den Vorteil, dass zur Verklebung des Verstärkungselementes im Strukturelement kein fluiddicht abgeschlossener Raum für den Klebstoff vorgesehen werden muss, sondern dass ein kostengünstigeres und einfach zu handhabendes offenes System ohne fluiddicht abgeschlossene Zwischenräume verwendet werden kann. Somit können Verstärkungselemente verwendet werden, welche keine Dichtungen aufweisen, was einem wesentlichen Kostenvorteil entspricht.

Weiterhin erlaubt es die vorliegende Erfindung, auch Teile mit grösseren Fertigungstoleranzen miteinander zu verkleben, weil keine fluiddicht abgeschlossene Räume für den Klebstoff vorgesehen werden müssen. Auch dies entspricht einem wesentlichen Kostenvorteil gegenüber den bekannten Systemen, weil dadurch die verschiedenen Elemente des Systems kostengünstiger mit grösseren Fertigungstoleranzen hergestellt werden können.

Zudem ist ein Vorgang des Verklebens einfacher zu bewerkstelligen, da ein Befüllen von geschlossenen Räumen mit Klebstoff Schwierigkeiten mit sich bringt, welche hierdurch vermieden werden können, insbesondere das Verdrängen der Luft im geschlossenen Hohlraum durch den Klebstoff.

Ein Kerngedanke der vorliegenden Erfindung besteht darin, dass durch den Einsatz eines geeigneten Klebstoffes ein offenes System zur Verklebung eines Verstärkungselementes in einem Strukturelement verwendet werden kann. Es wurde nämlich beobachtet, dass mit einem geeigneten Klebstoff ein sich selbst abdichtendes System geschaffen werden kann, vorausgesetzt, es werden diesbezüglich geeignet dimensionierte Kanäle und Schultern des Verstärkungselementes vorgesehen.

Dabei ist der Klebstoff so ausgebildet, dass er bei einer Abkühlung des Klebstoffes einen scharfen Übergang zwischen einem nicht verfestigten und einem verfestigten Zustand aufweist. Dies erlaubt es, Komponenten eines hier beschriebenen offenen Systems mit einem solchen geeigneten Klebstoff zu verkleben.

Dabei werden die Kanäle so dimensioniert, dass der durch die Kanäle fliessende Klebstoff vergleichsweise langsam abkühlt. Dies wird insbesondere dadurch erreicht, indem eine Oberfläche der Kanäle vergleichsweise klein ausgestaltet ist im Vergleich zu einem Volumen der Kanäle.

Demgegenüber kühlt der Klebstoff im Bereich zwischen der Schulter und dem Strukturelement vergleichsweise schneller ab. Dies wird insbesondere dadurch erreicht, indem in diesem Bereich eine Oberfläche vergleichsweise grösser ausgestaltet ist im Vergleich zu einem Volumen dieses Bereiches.

Eine solche Anordnung führt zu einer schnelleren Verfestigung des Klebstoffes auf den Schultern als in den Kanälen und damit zu einem zuverlässigen sich selbst verschliessenden System.

Durch ein geeignetes Vorsehen von Kanälen auf der Aussenseite des Strukturelementes kann nun der in die Kanäle eingebrachte Klebstoff im Zwischenraum zwischen Verstärkungselement und Strukturelement verteilt werden, und durch das geeignete Vorsehen von Schulterbereichen neben den Kanälen wird ein sich selbst verschliessendes System geschaffen.

Die Bezeichnung "offen" beziehungsweise "offenes System" bedeutet im Zusammenhang dieser Erfindung "flüssigkeitsdurchlässig" oder "nicht abgedichtet".

In einer beispielhaften Ausführungsform beträgt eine Kanalbreite zwischen 5 und 300 mm, bevorzugt zwischen 10 und 70 mm, besonders bevorzugt zwischen 10 und 30 mm.

In einer beispielhaften Ausführungsform beträgt eine Kanaltiefe zwischen 0.5 und 10 mm, bevorzugt zwischen 1 und 8 mm, besonders bevorzugt zwischen 2 und 5 mm.

In einer beispielhaften Ausführungsform beträgt eine Kanallänge zwischen 50 und 500 mm, bevorzugt zwischen 70 und 400 mm, besonders bevorzugt zwischen 100 und 300 mm.

Eine solche Dimensionierung des Kanals hat den Vorteil, dass dadurch der Klebstoff so langsam abgekühlt wird beim Durchfliessen des Kanals, dass der Klebstoff über eine gesamte Länge des Kanals verteilt wird, um dadurch das Verstärkungselement zuverlässig im Strukturelement zu verkleben.

Je nach Zusammensetzung und Applikationsparameter (z.B. Temperatur oder Extrusionsrate) des Klebstoffes kann die Dimensionierung des Kanals in den genannten Bereichen angepasst werden, um ein optimales Resultat zu erzielen. Wünschenswert ist dabei, dass der Klebstoff erst dann im Kanal vollständig abkühlt bzw. verfestigt, wenn die gewünschte Verteilung des Klebstoffes im Zwischenraum zwischen Verstärkungselement und Strukturelement erreicht worden ist.

In einer beispielhaften Ausführungsform hat der Kanal eine V-förmige oder eine U-förmige oder eine eckige oder eine halbrunde Form.

Je nachdem, wie schnell der Klebstoff durch den Kanal fliessen soll bzw. wie schnell der Klebstoff im Kanal abkühlen und somit verfestigen soll, kann eine geeignete Querschnittsform des Kanals ausgewählt werden. Grundsätzlich gilt, dass der Klebstoff schneller abkühlt, je grösser die Kontaktoberfläche zwischen Klebstoff und Verstärkungselement ausfällt. Somit wird der Klebstoff in einer halbrunden Form langsamer auskühlen als in einer viereckigen Querschnittsform.

In einer beispielhaften Ausführungsform hat der Kanal einen im Wesentlichen W-förmigen Querschnitt. Insbesondere weist dabei ein Boden des Kanals eine Erhebung auf. Eine solche Erhebung kann dabei abgerundet, wellenförmig, kantig, oder unregelmässig geformt sein.

Ein solcher im Wesentlichen W-förmiger Querschnitt des Kanals hat den Vorteil, dass dadurch eine Menge des benötigten Klebstoffes reduziert werden kann im Vergleich zu Kanälen ohne eine solche Erhebung des Bodens des Kanales.

Der Kanal kann einen konstanten Querschnitt aufweisen, in einem alternativen Ausführungsbeispiel kann der Kanal jedoch auch einen nicht-konstanten Querschnitt aufweisen. Dabei kann sowohl die Länge, die Breite, als auch die Tiefe des Kanals nichtkonstant ausgebildet sein. Somit sind beispielsweise auch Kanäle realisierbar, welche an Enden weniger tief sind als in einer Mitte des Kanals (beispielsweise unter einer Einfüllöffnung), oder Kanäle, welche in Draufsicht eine ovale Formgebung aufweisen.

Natürlich muss der Kanal nicht linear über dessen gesamte Länge verlaufen, sondern kann auch gebogen oder mit diversen Richtungsänderungen ausgeführt werden.

Allgemein dient der Kanal der groben Verteilung des Klebstoffes im zur Verklebung vorgesehenen Zwischenbereich zwischen Verstärkungselement und Strukturelement. Somit kann je nach Anforderung der jeweiligen Anwendung eine andere Kanalgeometrie vorteilhaft sein.

In einer beispielhaften Ausführungsform verläuft der Kanal quer oder im Wesentlichen quer zu einer Längsrichtung des Verstärkungselementes.

In einer alternativen Ausführungsform verläuft der Kanal längs oder im Wesentlichen längs zu einer Längsrichtung des Verstärkungselementes.

In einer weiteren beispielhaften Ausführungsform umrundet der Kanal das Verstärkungselement vollständig und ist so in sich geschlossen.

In einer weiteren beispielhaften Ausführungsform weist der Kanal Verzweigungen auf.

In einer weiteren beispielhaften Ausführungsform weist der Kanal einen Hauptkanal und damit verbundene Seitenkanäle auf.

Die Anordnung und Ausgestaltung des Kanals bzw. der Kanäle auf der Aussenseite des Verstärkungselementes ist davon abhängig, an welchen Stellen das Verstärkungselement mit dem Strukturelement verklebt werden soll. Zu diesem Zweck können Kanäle, welche das Verstärkungselement vollständig umrunden, vorgesehen werden, es können mehrere separat voneinander ausgestaltete Kanäle vorgesehen werden, oder aber es können Kanäle mit Verzweigungen bzw. Seitenkanälen vorgesehen werden. Insbesondere können Seitenkanäle dazu verwendet werden, die Klebefläche zwischen Verstärkungselement und Strukturelement zu vergrössern.

In einer beispielhaften Ausführungsform beträgt eine Breite der Schulter, gemessen in derselben Richtung wie die Kanalbreite, weniger als 30 mm, bevorzugt weniger als 20 mm, besonders bevorzugt weniger als 10 mm, besonders bevorzugt weniger als 5 mm.

Das Vorsehen einer derart dimensionierten Schulter hat den Vorteil, dass dadurch eine Verklebung des Strukturelementes mit dem Verstärkungselement realisierbar ist, welche eine geringe Menge an Klebstoff erfordert. Zudem dadurch eine grössere Gestaltungsfreiheit des Verstärkungselementes erhalten, da die Bereiche ausserhalb der Schulter nicht zur Verklebung des Verstärkungselementes mit dem Strukturelement vorgesehen sind und daher keine vordefinierten Formgebung aufweisen müssen.

In einer alternativen Ausführungsform beträgt eine Breite der Schulter, gemessen in derselben Richtung wie die Kanalbreite, zwischen 30 und 150 mm, bevorzugt zwischen 40 und 120 mm, besonders bevorzugt zwischen 50 und 100 mm.

Das Vorsehen einer derart dimensionierten Schulter hat hingegen den Vorteil, dass dadurch eine Verklebung des Strukturelementes mit dem Verstärkungselement realisierbar ist, welche eine grössere Verklebungsfläche aufweist, was zu einer mechanisch stabilieren Verbindung zwischen Strukturelement und Verstärkungselement führt.

Je nach Anforderung und Ausgangslage kann demnach eine geeignete Breite der Schulter gewählt werden. Um das Stoppen der Ausbreitung des Klebstoffes auf der Schulter sicherzustellen, kann beispielsweise das Verfestigungsverhalten des Klebstoffes durch eine entsprechende Anpassung der Klebstoffzusammensetzung, oder durch eine veränderte Klebstofftemperatur bei der Einbringung des Klebstoffes in den Kanal, oder durch eine Anpassung des Abstandes zwischen Schulter und Strukturelement, beeinflusst werden.

In einer beispielhaften Ausführungsform beträgt eine Breite des Anschlussbereiches, gemessen in derselben Richtung wie die Kanalbreite, mehr als 1 mm, bevorzugt mehr als 20 mm, besonders bevorzugt mehr als 30 mm, besonders bevorzugt mehr als 40 mm.

In einer beispielhaften Ausführungsform liegen die Schulter und der Anschlussbereich in derselben Ebene.

In einer alternativen Ausführungsform liegen die Schulter und der Anschlussbereich nicht in derselben Ebene.

Da der Anschlussbereich nicht mit Klebstoff bedeckt wird, ist es für die Verklebung unerheblich, wie dieser Anschlussbereich ausgestaltet ist. Wesentlich ist lediglich, dass der Raum, welcher zwischen der Schulter des Verstärkungselementes und dem Strukturelement gebildet wird, offen ist gegenüber dem angrenzenden Hohlraum des Strukturelementes.

Je nach Geometrie des Strukturelementes bzw. dessen Hohlraumes kann der Anschlussbereich des Verstärkungselementes auf geeignete Art und Weise ausgebildet werden.

In einer beispielhaften Ausführungsform beträgt ein Abstand zwischen Schulter und Strukturelement zwischen 0,5 und 5 mm, bevorzugt zwischen 0,8 und 4 mm, besonders bevorzugt zwischen 1 mm und 3 mm.

Ein derart dimensionierter Abstand zwischen Schulter und Strukturelement stellt sicher, dass der Klebstoff in diesem Bereich des Hohlraumes zwischen Strukturelement und Verstärkungselement schneller abkühlt und dadurch verfestigt als im Bereich der Kanäle, so dass der Klebstoff durch die Kanäle zwischen Strukturelement und Verstärkungselement verteilt wird, sich jedoch in den Bereichen der Schultern abkühlt und verfestigt und dadurch die Kanäle gegen den Hohlraum des Strukturelementes abdichtet.

Je nach Zusammensetzung und Applikationsparameter des Klebstoffes kann der Abstand zwischen Schulter und Strukturelement anders gewählt werden, um eine gewünschte Abdichtungswirkung des Klebstoffes in diesem Bereich zu erzielen. Ebenso kann dieser Abstand zwischen Schulter und Strukturelement dazu benutzt werden, eine Verklebungsfläche zwischen Verstärkungselement und Strukturelement zu beeinflussen, wobei ein grösserer Abstand zu einer grösseren Verklebungsfläche und ein kleinerer Abstand zu einer kleinere Verklebungsfläche führen wird.

In einer bevorzugten Ausführungsform hat das Verstärkungselement oder das Strukturelement eine Einfüllöffnung zur Einbringung des Klebstoffes in den Kanal.

Der Vorteil einer solchen Einfüllöffnung ist es, dass der Klebstoff direkt in den Kanal eingebracht werden kann.

In einer bevorzugten Weiterbildung mündet die Einfüllöffnung direkt in den Kanal. Dabei kann die Einfüllöffnung mittig in Bezug auf eine Länge und/oder Breite des Kanales angeordnet sein.

Weiterhin kann die Einfüllöffnung im Verstärkungselement, welches auch den Kanal aufweist, angeordnet sein, oder aber die Einfüllöffnung kann im Strukturelement angeordnet sein. Grundsätzlich ist die Anordnung der Einfüllöffnung davon abhängig, wie die Elemente in einem Verwendungszustand zugänglich sind (insbesondere in einer Situation, in welcher der Klebstoff eingebracht werden soll).

In einer beispielhaften Ausführungsform hat das Verstärkungselement zumindest ein Element zur Fixierung des Verstärkungselementes im Strukturelement. In einer bevorzugten Ausführungsform ist dieses Element als Clip ausgebildet.

In einer weiteren beispielhaften Ausführungsform hat das Verstärkungselement zumindest ein Element zur Abstützung des Verstärkungselementes im Strukturelement. In einer bevorzugten Ausführungsform ist dieses Element als Vorsprung im Strukturelement ausgebildet

Solche Elemente zur Fixierung und Abstützung des Verstärkungselementes im Strukturelement haben den Vorteil, dass das Verstärkungselement an einer vorgesehenen Position im Strukturelement verbleibt, bevor der Klebstoff verfestigt und / oder ausgehärtet ist.

Die eingangs gestellte Aufgabe wird weiterhin gelöst durch ein Verfahren zur Verstärkung eines Strukturelementes, wobei das Verfahren folgende Schritte umfasst: Bereitstellen eines Strukturelementes mit einem Hohlraum; Anordnen eines Verstärkungselementes im Hohlraum des Strukturelementes, wobei das Verstärkungselement zumindest einen Kanal an einer Aussenseite des Verstärkungselementes hat, wobei die Aussenseite des Verstärkungselementes neben dem Kanal eine Schulter bildet; Einbringen eines Klebstoffes in dem Kanal; und Ausbreiten des Klebstoffes zumindest teilweise im Kanal und zumindest teilweise auf der Schulter zur Verklebung des Verstärkungselementes mit dem Strukturelement, wobei die Ausbreitung des Klebstoffes auf der Schulter gestoppt wird.

Das Verfahren bietet wiederum den Vorteil, dass dadurch ein offenes System zur Verklebung eines Verstärkungselementes mit einem Strukturelement zur Verfügung gestellt werden kann, welches kostengünstiger herstellbar und einfacher in der Handhabung ist als geschlossene Systeme mit Dichtungen.

In einer beispielhaften Ausführungsform wird die Ausbreitung des Klebstoffes auf der Schulter durch eine Verfestigung des Klebstoffes auf der Schulter gestoppt.

In einer beispielhaften Ausführungsform umfasst das Verfahren den Schritt: Härten des Klebstoffes durch eine Anwendung einer Temperatur von zumindest 120°C, bevorzugt von zumindest 140°C, besonders bevorzugt von zumindest 160°C.

Beispielsweise kann die Härtung des Klebstoffes in einem Ofen stattfinden, wie er üblicherweise nach der kathodischen Tauchlackierung (KTL) der Karosserie zur Anwendung kommt. In solchen Öfen herrschen üblicherweise Temperaturen zwischen 120°C und 220°C. Solche Temperaturen eignen sich insbesondere für das Aushärten von Klebstoffen, welche im Zusammenhang mit dieser Erfindung verwendet werden können. Da die Karosserie mit dem darin angeordneten Verstärkungselement und dem verfestigten Klebstoff sowieso durch den Prozess der Tauchlackierung und anschliessender Hitzeanwendung zur Aushärtung der Lackierung geht, ist eine Nutzung dieser Hitzeanwendung im Ofen nach der Tauchlackierung zur Aushärtung des Klebstoffes besonders vorteilhaft.

In einer beispielhaften Ausführungsform wird der Klebstoff beim Einbringen in den Kanal durch eine Pumpe aus einem Klebstofftank gefördert.

In einer beispielhaften Ausführungsform wird der Klebstoff beim Einbringen in den Kanal durch eine Einfüllöffnung im Strukturelement gefördert.

Das Vorsehen von einer Einfüllöffnung im Strukturelement hat den Vorteil, dass das Verstärkungselement kostengünstiger ausgestaltet werden kann, weil bei dieser Ausführungsform keine Einfüllöffnungen und Leitungen im Verstärkungselement vorgesehen werden müssen.

In einer alternativen beispielhaften Ausführungsform wird der Klebstoff beim Einbringen in den Kanal durch eine Einfüllöffnung und eine Leitung im Verstärkungselement gefördert.

Das Vorsehen einer Einfüllöffnung und von Leitungen im Verstärkungselement hat den Vorteil, dass im Strukturelement keinerlei Öffnungen zur Einbringung des Klebstoffes vorgesehen werden müssen.

Je nach Anwendungsbereich und Anforderung kann hier die eine oder die andere Art der Befüllung des Zwischenraumes zwischen Verstärkungselement und Strukturelement mit Klebstoff ausgewählt werden.

Das Verstärkungselement kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann das Verstärkungselement einen beliebigen Aufbau und eine beliebige Struktur aufweisen. Es kann beispielsweise massiv, hohl, oder geschäumt sein oder eine gitterartige Struktur aufweisen. Die Oberfläche des Verstärkungselements kann typischerweise glatt, rau oder strukturiert sein.

### Klebstoff

Die nachfolgend beschriebene Klebstoffzusammensetzung ist ein beispielhafter Klebstoff, wie er im Zusammenhang dieser Erfindung verwendet werden kann.

Es wurde eine hitzehärtende einkomponentige Epoxidzusammensetzung gemäss Tabelle 1 hergestellt.

**Tabelle 1, Eingesetzte Rohstoffe.**

| **Rohstoffe** | **Gewichts-teile** |
|---|---|
| Epoxy-Flüssigharz, D.E.R. 331 (Bisphenol-A-diglycidylether), Dow | 50 |
| Polyesterpolyol, Dynacol 7380, Degussa AG, Deutschland | 5 |
| Reaktivverdünner, Hexandiolglycidylether, Denacol EX-212, Nagase America | 1 |
| Zähigkeitsverbesserer ***D-1*** | 34 |
| Härter, Dicyandiamid | 4.78 |
| Beschleuniger, substituierter Harnstoff | 0.22 |
| Pyrogene Kieselsäure | 5 |

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das

Produkt wurde so als Zähigkeitsverbesserer D-1 verwendet. Folgende Rohstoffe wurden dazu eingesetzt:

| |
|---|
| Poly-THF 2000 (Difunktionelles Polybutylenglykol) (OH-Equivalentgewicht = ca. 1000 g/OH-Equivalent), BASF |
| Liquiflex H (Hydroxylterminertes Polybutadien) (OH-Equivalentgewicht = ca. 1230 g/OH-Equivalent), Krahn |
| Isophoron-diisocyanat (= "IPDI"), Evonik |
| Cardolite NC-700 (Cardanol, meta-substituiertes Alkenyl-mono-Phenol), Cardolite |

### Herstellung Masterbatch

Das Polyesterpolyol wurde etwa 40°C über seinem Erweichungspunkt von 77 °C (ca. 100-140°C) während ca. 30 Minuten mit Epoxy-Flüssigharz vermischt bis eine klare Mischung (ca. 33 Gew.-% Polyesterpolyol bezogen auf das Gesamtgewicht des Masterbatch) entstand. Der Masterbatch wurde anschliessend auf ca. 100°C heruntergekühlt.

### Herstellung der hitzehärtenden einkomponentigen Epoxidzusammensetzung:

Die übrigen Komponenten der Epoxidzusammensetzung wurden zu einer homogenen Masse vermischt, bevorzugt bei Temperaturen von ca. 50-90°C. Sobald die Mischung homogen war wurde der Masterbatch in flüssiger Form (Temperatur Masterbatch 100°C) zugegeben und sofort vermischt.

Die Injektion der hitzehärtenden einkomponentigen Epoxidzusammensetzung erfolgte bei einer Temperatur von 60°C und bei einer Injektionsgeschwindigkeit von 50 ml/min.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: eine schematische Darstellung eines beispielhaften Verstärkungselementes in einem Strukturelement gemäss Stand der Technik;
- Fig. 3a bis 3c: schematische Darstellung eines beispielhaften Verstärkungselementes;
- Fig. 4a bis 4c: schematische Darstellung eines Querschnittes eines beispielhaften Verstärkungselementes in einem Strukturelement;
- Fig. 5a bis 5c: schematische Darstellung eines beispielhaften Einbringens eines Klebstoffes in den Zwischenraum zwischen Verstärkungselement und Strukturelement; und
- Fig. 6: eine schematische Darstellung einer Einbringungseinrichtung.

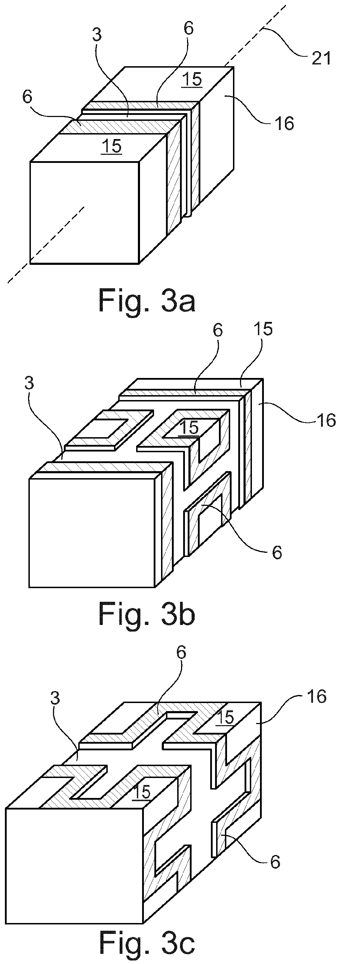

In den Fig. 3a bis 3c sind verschiedene Ausführungsformen eines beispielhaften Verstärkungselementes 16 dargestellt. Das Verstärkungselement 16 hat dabei jeweils eine Längsachse 21. Auf einer Aussenseite des Verstärkungselementes 16 ist zumindest einen Kanal 3 angeordnet. Zudem hat das Verstärkungselement 16 jeweils neben dem Kanal 3 eine Schulter 6, und direkt angrenzend an die Schulter 6 ist ein Anschlussbereich 15 angeordnet.

Das beispielhafte Verstärkungselement in Fig. 3a hat einen Kanal 3, welcher das Verstärkungselement 16 vollständig umrundet und welcher in sich geschlossen ist. Zudem ist der Kanal 3 in diesem Ausführungsbeispiel quer zur Längsachse 21 des Verstärkungselementes 16 angeordnet.

Im Ausführungsbeispiel gemäss Fig. 3b hat das Verstärkungselement zwei Kanäle 3, welche jeweils das Verstärkungselement 16 vollständig umrunden. Zudem sind die beiden umrundenden Kanäle 3 durch Seitenkanäle miteinander verbunden.

Das in Fig. 3c dargestellte Ausführungsbeispiel eines Verstärkungselementes 16 hat ebenfalls einen Kanal 3, welcher das Verstärkungselement 16 vollständig umrundet. Im Gegensatz zum Ausführungsbeispiel in Fig. 3a hat der umrundende Kanal 3 im Ausführungsbeispiel nach Fig. 3c auf jeder Längsseite des Verstärkungselementes 16 zusätzlich Seitenkanäle, um den Klebstoff breiter auf dem Verstärkungselement 16 verteilen zu können.

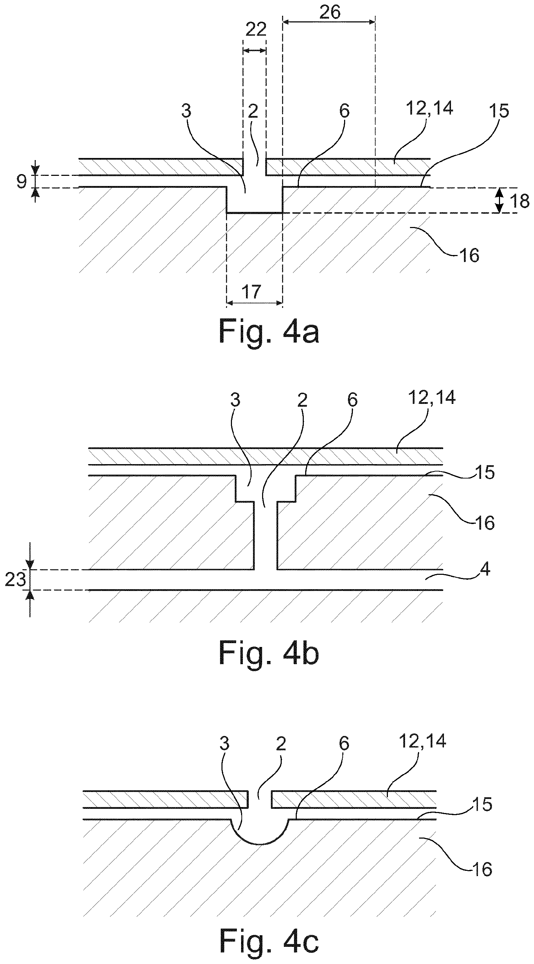

In den Fig. 4a bis 4c sind verschiedene Ausführungsformen von Einfüllöffnungen 2 und Kanälen 3 dargestellt. Dabei zeigen die Figuren jeweils einen Ausschnitt aus einem Querschnitt durch ein Strukturelement 12, 14 und ein darin angeordnetes Verstärkungselement 16.

In Fig. 4a ist der Kanal 3 mit einem rechteckigen Querschnitt ausgebildet. In diesem Ausführungsbeispiel ist die Einfüllöffnung 2 im Strukturelement 12, 14 angeordnet zur Befüllung des Kanals 3 mit Klebstoff.

In Fig. 4a ist zudem eingezeichnet, entlang welchen Richtungen jeweils eine Kanalbreite 17, eine Kanaltiefe 18, ein Durchmesser 22 der Einfüllöffnung 2, ein Abstand 9 zwischen Schulter 6 und Strukturelement 12, 14, und eine Schulterbreite 26 gemessen werden.

Dabei ist die Schulter 6 direkt am Kanal 3 anschliessend ausgebildet, und der Anschlussbereich 15 ist seinerseits direkt an der Schulter 6 anschliessend ausgebildet.

In Fig. 4b ist eine weitere Ausführungsform in Bezug auf die Einfüllöffnung 2 und den Kanal 3 dargestellt. In diesem Ausführungsbeispiel ist die Einfüllöffnung 2 im Unterschied zum Ausführungsbeispiel in Fig. 4a im Kanal 3 vorgesehen. Dabei führt eine Leitung 4 durch ein Inneres des Verstärkungselementes 16 und zur Einfüllöffnung 2, um den Klebstoff (nicht dargestellt) von einer Einfüllöffnung im Verstärkungselement (nicht dargestellt) in den Kanal 3 zu leiten. Die Leitung 4 hat dabei einen Durchmesser 23. Wiederum ist der Kanal 3 mit einem rechteckigen Querschnitt ausgebildet. Direkt anschliessend an den Kanal 3 ist die Schulter 6 angeordnet, und an die Schulter 6 anschliessend ist der Anschlussbereich 15 angeordnet.

In Fig. 4c ist ein weiteres Ausführungsbeispiel dargestellt. Hier hat der Kanal 3 einen halbrunden Querschnitt. Zudem ist in diesem Ausführungsbeispiel wiederum eine Einfüllöffnung 2 im Strukturelement 12, 14 angeordnet zur Befüllung des Kanals 3 mit Klebstoff.

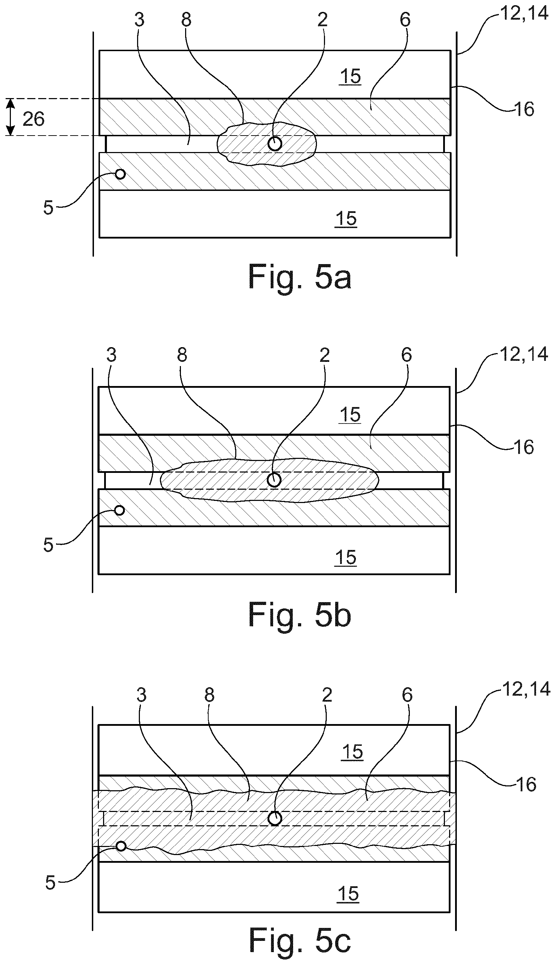

In den Fig. 5a bis 5c ist ein beispielhafter Vorgang einer Einbringung des Klebstoff 8 in einen Zwischenraum zwischen Verstärkungselement 16 und Strukturelement 12, 14 dargestellt. Dabei zeigt Fig. 5a eine Situation kurz nach einem Beginn des Einbringens mit Klebstoff 8. Fig. 5b zeigt eine Situation, in welcher sich der bereits eingebrachte Klebstoff 8 vorwiegend entlang des Kanals 3 ausbreitet, und in welcher gleichzeitig fortwährend neuer Klebstoff 8 eingebracht wird. Fig. 5c zeigt schliesslich eine Situation, in welcher der Klebstoff 8 fertig in den Zwischenraum eingebracht ist und das Verstärkungselement 16 in vorgesehener Art und Weise mit dem Strukturelement 12, 14 verklebt ist.

Der Klebstoff 8 wird durch eine Einfüllöffnung 2 in den Kanal 3 eingebracht. Der flüssige Klebstoff 8 verbreitet sich vorwiegend in Richtung des Kanals 3 und fliesst zumindest teilweise auf die Schulter 6 des Verstärkungselementes 16. Dadurch, dass der Abstand zwischen Schulter 6 und Strukturelement 12, 14 geringer ist als der Abstand zwischen einem Boden des Kanals 3 und dem Strukturelement 12, 14, kühlt der Klebstoff 8 im Bereich der Schulter 6 schneller aus als im Bereich des Kanals 3 und verfestigt sich als Folge dieser Abkühlung im Bereich der Schulter 6. Dies führt zu einer sich selbst abdichtenden Funktion des Klebstoffes 8 im Bereich der Schulter 6. Das System ist dabei derart konfiguriert, dass der Klebstoff 8 nicht über den Bereich der Schulter 6 fliesst, so dass der Anschlussbereich 15 frei von Klebstoff 8 bleibt.

Zudem ist in diesem Ausführungsbeispiel eine Prüföffnung 5 vorgesehen, welche erlaubt, einen Fortschritt der Ausbreitung des Klebstoffes 8 im Zwischenbereich zwischen Verstärkungselement 16 und Strukturelement 12, 14 zu überprüfen.

In den Fig. 5a und 5b hat sich der Klebstoff 8 noch nicht bis zur Prüföffnung 5 ausgebreitet. Fig. 5c zeigt hingegen eine Situation, in welcher der Klebstoff 8 in vorgesehener Art und Weise den Zwischenraum zwischen Verstärkungselement 16 und Strukturelement 12, 14 ausfüllt und dabei die Prüföffnung 5 erreicht.

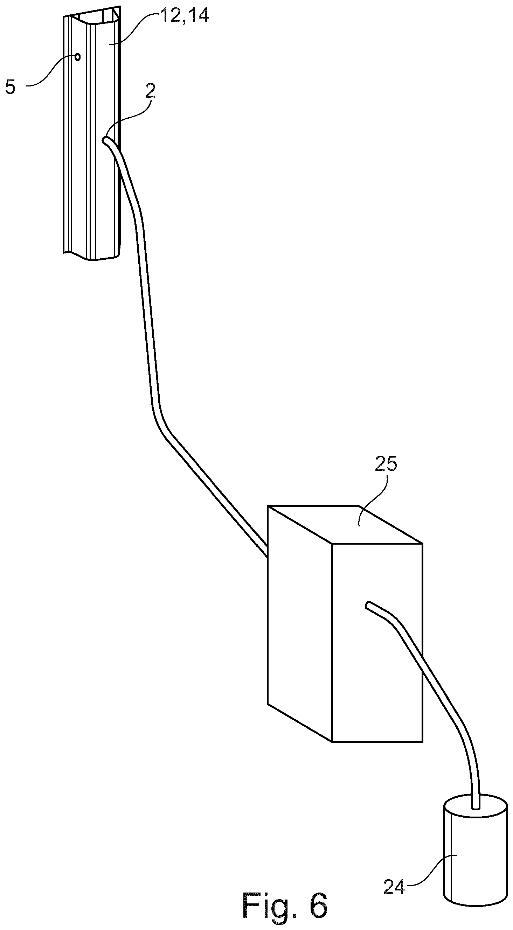

In Fig. 6 ist eine Einrichtung zur Einbringung des Klebstoffes in den Zwischenbereich zwischen Strukturelement 12, 14 und Verstärkungselement (nicht ersichtlich auf dieser Darstellung) dargestellt. Dabei fördert eine Pumpe 25 Klebstoff aus einem Klebstofftank 24 durch eine Einfüllöffnung 2 im Strukturelement 12, 14 in den Zwischenbereich zwischen Strukturelement und Verstärkungselement. Zum Überprüfen eines Fortschrittes einer Verteilung des Klebstoffes in diesem Zwischenbereich ist eine Prüföffnung 5 im Strukturelement 12, 14 vorgesehen.

## Patentansprüche

1. Verfahren zur Verstärkung eines Strukturelementes (12, 14), das Verfahren umfassend die Schritte:
Bereitstellen eines Strukturelementes (12, 14) mit einem Hohlraum;
Anordnen eines Verstärkungselementes (16) im Hohlraum des Strukturelementes (12, 14),
wobei das Verstärkungselement (16) zumindest einen Kanal (3) an einer Aussenseite des Verstärkungselementes (16) hat, und wobei die Aussenseite des Verstärkungselementes (16) neben dem Kanal (3) eine Schulter (6) bildet, wobei ein Raum zwischen der Schulter (6) des Verstärkungselementes (16) und dem Strukturelement (12, 14) gebildet wird, welcher offen ist gegenüber einem angrenzenden Hohlraum des Strukturelementes (12, 14), **dadurch gekennzeichnet, dass**
und das Verstärkungselement (16) zur Bildung eines offenen Systems bezüglich einer Verklebung des Verstärkungselementes (16) im Strukturelement (12, 14) vorgesehen ist;
Einbringen eines Klebstoffes (8) in den Kanal (3), nachdem das Verstärkungselement (16) im Hohlraum des Strukturelementes (12, 14) angeordnet wurde; und
Ausbreiten des Klebstoffes (8) zumindest teilweise im Kanal (3) und zumindest teilweise auf der Schulter (6) zur Verklebung des Verstärkungselementes (16) mit dem Strukturelement (12, 14);
wobei die Ausbreitung des Klebstoffes (8) auf der Schulter (6) gestoppt wird.

2. Verfahren nach Anspruch 1, wobei die Ausbreitung des Klebstoffes (8) auf der Schulter (6) durch eine Verfestigung des Klebstoffes auf der Schulter (6) gestoppt wird, und / oder wobei das Verfahren den Schritt umfasst: Härten des Klebstoffes (8) durch eine Anwendung einer Temperatur von zumindest 120° C.

3. Verfahren nach einem der Ansprüche 1 oder 2, wobei der Klebstoff (8) beim Einbringen in den Kanal (3) durch eine Pumpe (25) aus einem Klebstofftank (24) gefördert wird und/oder
wobei der Klebstoff (8) beim Einbringen in den Kanal (3) durch eine Einfüllöffnung (2) im Strukturelement (16) gefördert wird und/oder
wobei der Klebstoff (8) beim Einbringen in den Kanal (3) durch eine Einfüllöffnung (7) und eine Leitung (4) in dem Verstärkungselement (16) gefördert wird.

4. Verfahren nach einem der vorhergehenden Ansprüche, wobei eine Kanalbreite (17) zwischen 5 und 300 mm beträgt und/oder
wobei eine Kanaltiefe (18) zwischen 0.5 und 10 mm beträgt und/oder wobei eine Kanallänge zwischen 50 und 500 mm beträgt.

5. Verfahren nach einem der vorhergehenden Ansprüche, wobei ein Querschnitt des Kanals (3) eine V-förmige oder eine U-förmige oder eine eckige oder eine halbrunde Form hat.

6. Verfahren nach einem der vorhergehenden Ansprüche, wobei der Kanal (3) quer zu einer Längsachse (21) des Verstärkungselementes (16) verläuft.

7. Verfahren nach einem der vorhergehenden Ansprüche, wobei der Kanal (3) das Verstärkungselement (16) vollständig umrundet und so in sich geschlossen ist.

8. Verfahren nach einem der vorhergehenden Ansprüche, wobei der Kanal (3) Verzweigungen aufweist und/oder
wobei der Kanal (3) einen Hauptkanal und damit verbundene Seitenkanäle aufweist.

9. Verfahren nach einem der vorhergehenden Ansprüche, wobei eine Breite der Schulter (6), gemessen in derselben Richtung wie die Kanalbreite (17), weniger als 30 mm beträgt.

10. Verfahren nach einem der vorhergehenden Ansprüche, wobei eine Breite des Anschlussbereichs (15), gemessen in derselben Richtung wie die Kanalbreite (17), mehr als 1 mm beträgt.

11. Verfahren nach einem der vorhergehenden Ansprüche, wobei die Schulter (6) und der Anschlussbereich (15) in derselben Ebene liegen.

12. Verfahren nach einem der vorhergehenden Ansprüche, wobei ein direkt an die Schulter (6) anschliessender Anschlussbereich (15) der Aussenseite des Verstärkungselementes (16) frei ist von Klebstoff (8).

13. Verfahren nach einem der vorhergehenden Ansprüche, wobei ein Abstand (9) zwischen Schulter (6) und Strukturelement (12, 14) zwischen 0,5 und 5 mm beträgt.

## Claims

1. Method for reinforcing a structural element (12, 14), the method comprising the steps of:
providing a structural element (12, 14) having a cavity;
disposing a reinforcing element (16) in the cavity of the structural element (12, 14), the reinforcing element (16) having at least one channel (3) on an outside of the reinforcing element (16), and the outside of the reinforcing element (16) forming a shoulder (6) alongside the channel (3), where a space is formed between the shoulder (6) of the reinforcing element (16) and the structural element (12, 14), said space being open in relation to a bordering cavity of the structural element (12, 14), **characterized in that** the reinforcing element (16) is intended for forming an open system in respect of adhesive bonding of the reinforcing element (16) in the structural element (12, 14);
introducing an adhesive (8) into the channel (3) after the reinforcing element (16) has been disposed in the cavity of the structural element (12, 14); and
spreading the adhesive (8) at least partly in the channel (3) and at least partly on the shoulder (6) for bonding the reinforcing element (16) to the structural element (12, 14);
where the spreading of the adhesive (8) is stopped on the shoulder (6).

2. Method according to Claim 1, wherein the spreading of the adhesive (8) on the shoulder (6) is stopped by solidification of the adhesive on the shoulder (6), and/or wherein the method comprises the step of: curing the adhesive (8) by application of a temperature of at least 120°C.

3. Method according to either of Claims 1 and 2,
wherein the adhesive (8), on introduction into the channel (3), is conveyed by a pump (25) from an adhesive tank (24), and/or
wherein the adhesive (8), on introduction into the channel (3), is conveyed through a filling opening (2) in the structural element (16), and/or
wherein the adhesive (8), on introduction into the channel (3), is conveyed through a filling opening (7) and a line (4) in the reinforcing element (16).

4. Method according to any of the preceding claims,
wherein a channel width (17) is between 5 and 300 mm and/or
wherein a channel depth (18) is between 0.5 and 10 mm and/or
wherein a channel length is between 50 and 500 mm.

5. Method according to any of the preceding claims, wherein a cross section of the channel (3) has a V-shaped or a U-shaped or an angular or a semicircular form.

6. Method according to any of the preceding claims, wherein the channel (3) runs transversely to a longitudinal axis (21) of the reinforcing element (16).

7. Method according to any of the preceding claims, wherein the channel (3) goes completely around the reinforcing element (16) and so is self-contained.

8. Method according to any of the preceding claims,
wherein the channel (3) has branches and/or
wherein the channel (3) has a main channel and side channels connected thereto.

9. Method according to any of the preceding claims, wherein a width of the shoulder (6), measured in the same direction as the channel width (17), is less than 30 mm.

10. Method according to any of the preceding claims, wherein a width of the joining region (15), measured in the same direction as the channel width (17), is more than 1 mm.

11. Method according to any of the preceding claims, wherein the shoulder (6) and the joining region (15) lie in the same plane.

12. Method according to any of the preceding claims, wherein a joining region (15), directly adjoining the shoulder (6), of the outside of the reinforcing element (16) is free of adhesive (8).

13. Method according to any of the preceding claims, wherein a spacing (9) between shoulder (6) and structural element (12, 14) is between 0.5 and 5 mm.

## Revendications

1. Procédé de renforcement d'un élément structural (12, 14), le procédé comprenant les étapes suivantes :
la fourniture d'un élément structural (12, 14) ayant une cavité ;
l'agencement d'un élément de renforcement (16) dans la cavité de l'élément structural (12, 14), l'élément de renforcement (16) ayant au moins un canal (3) sur un côté extérieur de l'élément de renforcement (16), et le côté extérieur de l'élément de renforcement (16) formant un épaulement (6) à côté du canal (3), un espace étant formé entre l'épaulement (6) de l'élément de renforcement (16) et l'élément structural (12, 14), qui est ouvert par rapport à une cavité adjacente de l'élément structural (12, 14), **caractérisé en ce que** l'élément de renforcement (16) est prévu pour former un système ouvert au regard d'un collage de l'élément de renforcement (16) dans l'élément structural (12, 14) ;
l'introduction d'un adhésif (8) dans le canal (3) après que l'élément de renforcement (16) a été agencé dans la cavité de l'élément structural (12, 14) ; et
l'étalement de l'adhésif (8) au moins partiellement dans le canal (3) et au moins partiellement sur l'épaulement (6) pour coller l'élément de renforcement (16) à l'élément structural (12, 14) ;
l'étalement de l'adhésif (8) sur l'épaulement (6) étant stoppé.

2. Procédé selon la revendication 1, dans lequel l'étalement de l'adhésif (8) sur l'épaulement (6) est stoppé par une solidification de l'adhésif sur l'épaulement (6), et/ou dans lequel le procédé comprend l'étape suivante : le durcissement de l'adhésif (8) en appliquant une température d'au moins 120 °C.

3. Procédé selon l'une quelconque des revendications 1 ou 2, dans lequel l'adhésif (8), lors de l'introduction dans le canal (3), est transporté par une pompe (25) à partir d'un réservoir d'adhésif (24) et/ou dans lequel l'adhésif (8), lors de l'introduction dans le canal (3), est transporté à travers une ouverture de remplissage (2) dans l'élément structural (16) et/ou dans lequel l'adhésif (8), lors de l'introduction dans le canal (3), est transporté à travers une ouverture de remplissage (7) et une conduite (4) dans l'élément de renforcement (16).

4. Procédé selon l'une quelconque des revendications précédentes, dans lequel une largeur de canal (17) est comprise entre 5 et 300 mm et/ou
dans lequel une profondeur de canal (18) est comprise entre 0,5 et 10 mm et/ou
dans lequel une longueur de canal est comprise entre 50 et 500 mm.

5. Procédé selon l'une quelconque des revendications précédentes, dans lequel une section transversale du canal (3) a une forme en V ou en U ou une forme angulaire ou semi-circulaire.

6. Procédé selon l'une quelconque des revendications précédentes, dans lequel le canal (3) s'étend transversalement à un axe longitudinal (21) de l'élément de renforcement (16).

7. Procédé selon l'une quelconque des revendications précédentes, dans lequel le canal (3) fait le tour complet de l'élément de renforcement (16) et est ainsi fermé sur lui-même.

8. Procédé selon l'une quelconque des revendications précédentes, dans lequel le canal (3) présente des ramifications et/ou
dans lequel le canal (3) présente un canal principal et des canaux latéraux reliés à celui-ci.

9. Procédé selon l'une quelconque des revendications précédentes, dans lequel une largeur de l'épaulement (6), mesurée dans la même direction que la largeur de canal (17), est inférieure à 30 mm.

10. Procédé selon l'une quelconque des revendications précédentes, dans lequel une largeur de la zone de raccordement (15), mesurée dans la même direction que la largeur de canal (17), est supérieure à 1 mm.

11. Procédé selon l'une quelconque des revendications précédentes, dans lequel l'épaulement (6) et la zone de raccordement (15) sont situés dans le même plan.

12. Procédé selon l'une quelconque des revendications précédentes, dans lequel une zone de raccordement (15) du côté extérieur de l'élément de renforcement (16), directement raccordée à l'épaulement (6), est exempte d'adhésif (8).

13. Procédé selon l'une quelconque des revendications précédentes, dans lequel une distance (9) entre l'épaulement (6) et l'élément structural (12, 14) est comprise entre 0,5 et 5 mm.
